# EUROPÄISCHE PATENTSCHRIFT

(11) **EP 2 587 203 B1**
(45) Veröffentlichungstag und Bekanntmachung des Hinweises auf die Patenterteilung: **23.09.2015**
(21) Anmeldenummer: 11008590.9
(22) Anmeldetag: 26.10.2011
(51) Int. Cl.: F26B 17/04, F26B 23/00, F26B 25/00

(54) **Bandtrockner**
Belt dryer
Séchoir à bande

(43) Veröffentlichungstag der Anmeldung: 01.05.2013
(73) Patentinhaber: Stela Laxhuber GmbH, 84323 Massing (DE)
(72) Erfinder: Laxhuber, Thomas, 84323 Massing (DE); Latein, Tobias, 84567 Erlbach (DE)
(74) Vertreter: Rothkopf, Ferdinand

(56) Entgegenhaltungen:
- EP-A2- 0 901 808
- WO-A1-02/093097
- DE-A1- 4 230 364
- DE-U1-202009 001 935
- GB-A- 753 161
- US-A- 3 100 106

## Beschreibung

### Hintergrund der Erfindung

Die Erfindung betrifft einen Bandtrockner zum Trocknen eines staubhaltigen Gutes mittels Warmluft in mindestens zwei Sektionen, die vom Gut aufeinander folgend durchlaufen werden und luftströmungsmäßig weitgehend getrennt sind.

Aus DE 20 2009 001 935 U1 ist ein Einbandtrockner für die Trocknung staubhaltiger Produkte, wie z.B. Holzsägespäne, Holzsägemehl oder vorentwässertem Klärschlamm, bekannt, bei dem die Fördereinrichtung des Gutes in mehrere Sektionen unterteilt ist und die einzelnen Sektionen luftströmungsmäßig voneinander abgetrennt sind. Die Sektionen weisen je einen eigenen Absaugventilator auf. Somit soll die Heiz- und Luftleistung sektionsweise auf die jeweils gewünschten, gegebenenfalls unterschiedlichen Werte abgestuft werden können. Zur weiteren Energieeinsparung soll ein Teil der Luft im Kreislauf geführt werden. Die im Kreislauf geführte Luft einer Sektion wir durch einen Zentroabscheider oder einen Filter geführt und im Heizregister der gleichen Sektion wieder erwärmt. Der restliche Teil der Luft der Sektion wird in die Atmosphäre abgeblasen.

Aus DE 42 30 364 A1 ist ein Bandtrockner zum Trocknen von faserigen, spanförmigen, körnigen, brockigen oder stückigen Gütern, insbesondere Holzhackschnitzeln, bekannt, bei dem das Trocknungsgas zumindest teilweise von einem Kompartiment in mindestens ein, bezogen auf die Bandlaufrichtung, davor liegendes Kompartiment geführt wird. Bei diesem Gegenstromverfahren ergibt sich der Vorteil, dass Trocknungsgas mit der niedrigsten relativen Feuchte zuerst mit dem Gut in Berührung kommt, bei dem der Trocknungsprozess schon am weitesten fortgeschritten ist. Im Übrigen soll der Bandtrockner als praktisch geschlossenes System bezüglich des Trocknungsgases gefahren werden.

Aus EP0901808 (D3) ist ein Bandtrockner mit allen Merkmalen des Oberbegriffs des Anspruchs 1 bekannt.

### Zugrundeliegende Aufgabe

Der Erfindung liegt die Aufgabe zugrunde, einen Bandtrockner zum Trocknen eines staubhaltigen Gutes mittels Warmluft in mindestens drei Sektionen, die vom Gut aufeinander folgend durchlaufen werden und luftströmungsmäßig weitgehend getrennt sind, zu schaffen, der im Vergleich zu bekannten Bandtrocknern eine weitergehende Energieeinsparung möglich macht.

### Erfindungsgemäße Lösung

Diese Aufgabe ist erfindungsgemäß mit einem Bandtrockner nach Anspruch 1 gelöst.

Die erfindungsgemäße Lösung basiert auf der Erkenntnis, dass die Abluft aus der letzten Sektion eines Bandtrockners am meisten mit Staub belastet ist. Diese hohe Staubbelastung stammt insbesondere daher, dass das Gut in der letzten Sektion am trockensten ist. Aufgrund von Abrieb am derart trockenen Gut entsteht dort vermehrt Staub, der mit der Abluft aus dem Gut abgeführt wird. Bei herkömmlichen Bandtrocknern wird solcher Staub, wie oben bereits erwähnt, aus der Abluft mit einem Abscheider oder Filter abgeschieden und abgeführt. Das Abscheiden erfordert aber zusätzlichen technischen Aufwand und führt (insbesondere aufgrund von Druckverlusten am Abscheider oder Filter) zu zusätzlichem Energieaufwand. Erfindungsgemäß wurde erkannt, dass es eigentlich gar nicht erforderlich ist, den Staub aus dem Bandtrockner getrennt abzuführen. Der Staub darf nur nicht mit Abluft in die Umgebungsluft des Bandtrockners gelangen. Dort würde der Staub zu einer nicht zu akzeptierenden Staubbelastung der Umgebung des Bandtrockners führen. Im Gut selbst darf der Staub hingegen verbleiben und er darf auch mit dem Gut aus dem Bandtrockner abgeführt werden. Eine solche Staubabfuhr zusammen mit dem Gut ist sogar von Vorteil, nämlich insbesondere dann, wenn das Gut später z.B. in einer Biogasanlage oder einer Pelletierung zugeführt und hinsichtlich seiner gesamten Zellulosemasse verwertet werden soll. In solchen Biogasanlagen können auch kleine Gutpartikel von den dortigen Mikroorganismen umgesetzt werden.

Diese Erkenntnisse führen bei der erfindungsgemäßen Lösung dazu, dass der Staub aus der Abluft der letzten Sektion nicht abgeschieden, sondern zusammen mit der Abluft der vorletzten Sektion wieder als Zuluft zugeführt wird. Es entfallen damit also Energieverluste, die mit einer Staubabscheidung verbunden wären. Der derart rückgeführte Staub wird beim Durchlaufen von Gut in der vorletzten Sektion wieder vom dort durchlaufenden Gut aufgenommen. Der Staub gelangt von der vorletzten Sektion dann wieder zurück in die letzte Sektion, wo er zwar teilweise erneut von der Abluft ausgespült wird, größtenteils aber im Gut verbleibt und dann zusammen mit diesem den Bandtrockner verlässt.

Das erfindungsgemäße Rückführen von Staub in die vorletzte Sektion ist gerade auch deshalb besonders wirksam, weil in dieser vorletzten Sektion das Gut noch mehr Feuchtigkeit enthält als in der letzten Sektion selbst. Der Staub wird daher in der vorletzten Sektion vom Gut wieder stark aufgenommen. Die Abluft aus der vorletzten Sektion kann dabei vorteilhaft selbst ohne ein Abscheiden von Staub in die Umgebung abgeführt werden.

Die letzte Sektion wird erfindungsgemäß im Hinblick auf die dortige Zuluft mit Frischluft versorgt. Dies bewirkt, dass nicht Staub in der letzten Sektion selbst im Kreis geführt wird. Solcher Staub würde vom vergleichsweise trockenen Gut in der letzten Sektion nur wenig aufgenommen werden. Der Staub würde also ständig im Kreis geführt werden, was allenfalls zu Staubablagerungen an den Luftführungssystemen und zugehörigen Wärmeübertragern der letzten Sektion führen würde.

Die Abluft aus der letzten Sektion hat ferner die Eigenschaft, dass sie nicht vollständig mit Wasser bzw. Feuchtigkeit aus dem zu trocknenden Gut aufgesättigt ist. Dies führt dazu, dass diese Luft in der vorletzten Sektion nicht nur vorteilhaft weiteres Wasser bzw. Feuchtigkeit aufnehmen kann, sondern auch, dass sich der Staub aus dieser Luft wieder leichter löst und in der vorletzten Sektion am dortigen Gut haften bleibt. Gegebenenfalls kann der vorletzten Sektion zum Beispiel für eine Feinregelung der Temperatur zusätzlich ein zumindest geringer Teilluftstrom Frischluft zugeführt werden.

Der letzten und vorletzten Sektion ist ferner mindestens eine weitere Sektion vorgelagert und je eine weitere Frischluftzuführeinrichtung zum Zuführen von Frischluft als Zuluft zu der zugehörigen mindestens einen weiteren Sektion vorgesehen. Die weitere Sektion ist nicht mit Abluft aus einer anderen Sektion versorgt.

Die weiteren Sektionen werden also, so wie auch die letzte Sektion des erfindungsgemäßen Bandtrockners mit Frischluft versorgt, während die vorletzte Sektion mit der Abluft nebst dem darin enthaltenen Staub aus der letzten Sektion versorgt wird. Die weiteren Sektionen werden dabei vorzugsweise so betrieben, dass die austretende Luft einen sehr hohen Feuchtigkeitssättigungsgrad hat. Es ist dann energetisch sinnvoll diese Luft in die Umgebung abzugeben und diese Abgabe ist auch möglich, weil in diesen Sektionen vergleichsweise wenig Staub mit der Abluft aus dem noch vergleichsweise feuchten Gut ausgeführt wird.

Bei einer vorteilhaften Weiterbildung der Erfindung ist die Abluftrückführeinrichtung der Abluft aus der letzten Sektion als Zuluft für die vorletzte Sektion mit einem Wärmeübertrager zum Erwärmen der rückgeführten Abluft versehen. Der Wärmeübertrager wirkt also als Umluft-Wärmeübertrager, mit dem die Luft, die nachfolgend der vorletzten Sektion wieder zugeführt wird, nochmals erwärmt werden kann. Die derart nachgeheizte Zuluft kann in der vorletzten Sektion vermehrt Feuchtigkeit aus dem dortigen Gut aufnehmen.

Jede der Frischluftzuführeinrichtungen ist vorteilhafterweise mit einem Wärmeübertrager zum Erwärmen der Frischluft versehen. Die Wärmeübertrager dienen zum sektionsweisen Aufheizen der Frischluft und werden bevorzugt wasser- oder dampfgespeist. Die sektionsweise Aufheizung ermöglicht eine voneinander unabhängige Steuerung der Heizleistung an den einzelnen Sektionen. Die Steuerung erfolgt so, dass mittels einer Temperaturüberwachung am Vorlauf und Rücklauf des Wärmeübertragers zusammen mit der Förderleistung eines Luftförderers (in der Regel ein Ventilator) die abgegebene und damit von der Luft aufgenommene Wärmemenge ermittelt wird. Diese Wärmemenge wird auf einen Sollwert geregelt, d.h. der Wärmeübertrager muss einem Wärmelieferanten (z.B. einem Heizkraftwerk) eine bestimmte Wärmemenge abgenommen haben. Mit Hilfe einer Feuchtemessung am Gut wird dann die Geschwindigkeit des das Gut transportierenden Bandes des Bandtrockners geregelt. Die Wärmeübertrager sind bevorzugt mit einer Nassreinigung versehen, mittels der Verschmutzungen aus dem Wärmeübertragern ausgespült werden können, ohne dass sie in das Gut selbst gelangen.

An jeder Sektion des erfindungsgemäßen Bandtrockners ist vorzugsweise eine Absaugeinrichtung zum Abführen der Abluft aus der Sektion vorgesehen. Im Vergleich zu einem Einblasen von Zuluft hat das Absaugen der Abluft den Vorteil, dass im Gut Unterdruck entsteht, der das Abdunsten von Feuchtigkeit aus dem Gut weiter unterstützt.

Die Abluftrückführeinrichtung ist ferner bevorzugt mit einer Absaugeinrichtung zum Abführen der Abluft aus der letzten Sektion vorgesehen ist, die zugleich zum Zuführen der Abluft zu der vorletzten Sektion angepasst ist. Zu- und Abfuhr der umzuwälzenden Luft können damit von nur einer Fördereinrichtung erledigt werden. Dies führt zwar dazu, dass die letzte und die vorletzte Sektion luftfördermäßig gleich betrieben werden, es vereinfacht aber auch die Gesamtregelung des erfindungsgemäßen Bandtrockners. Die angestrebten Feuchtewerte des Guts können mit dem erfindungsgemäßen Bandtrockner vorteilhaft dadurch erreicht werden, dass gemäß der oben beschriebenen Regelung letztendlich allein die Regelung der Bandgeschwindigkeit über das Trocknungsergebnis entscheidet.

Die vorletzte Sektion und gegebenenfalls vorgelagerte, weitere Sektionen sind wie bereits erwähnt vorzugsweise mit einer Absaugeinrichtung zum Abführen der Abluft in die Umgebung des Bandtrockners versehen. Eine derartige Abfuhr ermöglicht einen sehr einfachen Aufbau des erfindungsgemäßen Bandtrockners. Alternativ können an der vorletzten Sektion und gegebenenfalls vorgelagerten, weiteren Sektionen Staubabscheider vorgesehen sein und/oder es kann eine Rückführung von Abluft nebst des darin enthaltenen Staubes in die jeweils vorgelagerte Sektion vorgesehen sein.

Wie oben bereits erwähnt, werden bei dem erfindungsgemäßen Bandtrockner die Absaugeinrichtungen vorzugsweise sektional getrennt geregelt. Diese Regelung ist insbesondere dadurch möglich, dass eine Abschottung der Ventilatoren der einzelnen Sektionen untereinander sichergestellt ist. Die Ventilatoren können dann mit Frequenzumformern auch unabhängig voneinander geregelt werden. Sind solche Abschottungen zwischen den Sektionen nicht vorgesehen, müssen die Ventilatoren gleichzeitig und gleichmäßig eingestellt werden, sonst könnte es wegen einer ansonsten vorteilhaften Parallelschaltung der Ventilatoren zu Kurzschluss kommen.

Vorzugsweise ist ferner eine Bandreinigungseinrichtung vorgesehen, mit der Zuluft aus der letzten Sektion abgeführt und zum Reinigen des Bandes des Bandtrockners verwendet werden kann. Die Reinigungsluft wird dann nebst dem darin enthaltenen Staub in eine Abfördereinrichtung verbracht. Die Abfördereinrichtung ist vorzugsweise als Stopfschnecke gestaltet, was die Abdichtung des erfindungsgemäßen Gesamtsystems erleichtert.

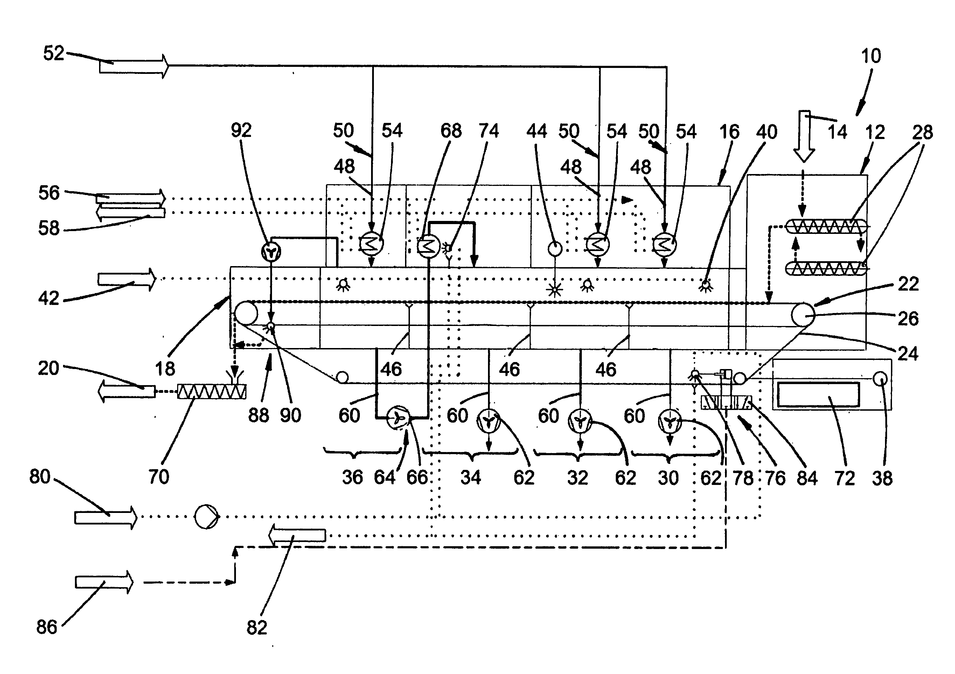

### Kurzbeschreibung der Zeichnung

Nachfolgend wird ein Ausführungsbeispiel der erfindungsgemäßen Lösung anhand der beigefügten Zeichnung näher erläutert.

Es zeigt die Fig. einen stark schematisierten Längsschnitt eines Ausführungsbeispiels eines erfindungsgemäßen Bandtrockners.

### Detaillierte Beschreibung des Ausführungsbeispiels

In der Fig. ist ein Bandtrockner 10 dargestellt, bei dem an einer Gutaufgabe 12 kontinuierlich zu trocknendes feuchtes Gut 14, wie beispielsweise Holzspäne oder Getreide, einer Guttrocknung 16 zugeführt wird. In der Guttrocknung 16 wird das Gut einem Trocknungsprozess unterworfen, bis es an einer Gutabgabe 18 als getrocknetes Gut 20 den Bandtrockner 10 wieder verlässt. Der Bandtrockner 10 ist als Durchlauftrockner mit einer Bandvorrichtung 22 gestaltet. Die Bandvorrichtung 22 dient zum Transportieren des zu trocknenden Gutes durch den Bandtrockner 10 und ist dazu mit einem Band 24 gestaltet, welches mittels Bandrollen 26 durch den Bandtrockner 10 hindurch umläuft. Zum Aufgeben des feuchten Gutes 14 auf das Band 24 sind an der Gutaufgabe 12 zwei Verteilschnecken 28 vorgesehen.

Die Guttrocknung 16 ist in vorliegend vier Sektionen 30, 32, 34 und 36 unterteilt, wobei das Band 24 von einer Bandlaufsteuerung 38 gesteuert, sämtliche vier Sektionen 30, 32, 34 und 36 durchläuft. Das zu trocknende Gut gelangt dabei ausgehend von der Gutaufgabe 12 nacheinander durch die Sektion 30, dann die Sektion 32, die Sektion 34 als vorletzte Sektion und schließlich durch die Sektion 36 als letzte Sektion. Während des derartigen Durchlaufs wird das Gut in jeder der Sektionen getrocknet, wodurch sich sein Feuchtegrad bzw. Feuchtegehalt, d.h. sein Gehalt an Feuchtigkeit bzw. Wasser je Volumeneinheit stetig verringert.

Um im Havariefall im Inneren des Bandtrockners 10 löschen zu können, ist eine Sprinkleranlage 40 vorgesehen, der Wasser 42 zugeführt werden kann. Ferner befindet sich im Inneren des Bandtrockners 10 ein Wendewerk 44 zur Durchmischung und Homogenisierung des darin auf dem Band 24 transportierten Gutes.

Die einzelnen Sektionen 30, 32, 34 und 36 sind mittels Abschottblechen 46 unterhalb des auf dem Band 24 transportierten Gutes strömungstechnisch voneinander getrennt. An der Oberseite des auf dem Band 24 transportierten Gutes kann den einzelnen Sektionen 30, 32, 34 und 36 Zuluft 48 zugeführt werden. Bei den Sektionen 30, 32 und 36 wird diese Zuluft 48 mittels einer Frischluftzuführeinrichtung 50 als Frischluft 52 aus der Umgebung des Bandtrockners 10 zugeführt. Dabei wird die Frischluft 52 an je einem Wärmeübertrager 54 an den Sektionen 30, 32 und 36 zunächst aufgeheizt, bevor sie durch das dortige Gut geleitet wird. Die Wärmeübertrager 54 werden mittels eines Vorlaufs 56 und eines Rücklaufs 58 mit Warmwasser oder Dampf versorgt.

Nachdem die Luft an den Sektionen 30, 32 und 36 durch das Gut hindurch getreten ist, wird sie als Abluft 60 mittels je einer Absaugeinrichtung 62 in Form eines Absaugventilators aus der jeweiligen Sektion abgeführt. Die Abluft 60 der letzten Sektion 36 wird dabei mittels einer Abluftrückführeinrichtung 64 zu der Zuluftseite der Sektion 34 zurückgeführt. Dazu ist an der Abluftrückführeinrichtung 64 unterhalb dem auf dem Band 24 transportierten Gut eine Absaugeinrichtung 66 ebenfalls in Form eines Absaugventilators vorgesehen, die zugleich unmittelbar zum Zuführen der Abluft 60 aus der letzten Sektion 36 inklusive dem in dieser Abluft enthaltenen Staubes als Zuluft 48 zu der vorletzten Sektion 34 dient. Zum Erwärmen dieser Zuluft 48 nebst dem darin enthalten Staub aus der letzten Sektion 36 ist an der vorletzten Sektion 34 ein Wärmeübertrager 68 vorgesehen.

Bei dem Bandtrockner 10 wird damit aus der letzten Sektion 36, die wegen des dortigen hohen Trocknungsgrades am meisten mit Staub belastet ist, der Staub mit der dortigen Abluft 60 aus dem Gut abgeführt und der vorletzten Sektion 34 wieder zugeführt. Der Staub wird damit ohne technischen Mehraufwand in das Gut zurückgeführt und nicht in die Umgebungsluft des Bandtrockners 10 abgegeben.

Der rückgeführte Staub wird vom Gut in der vorletzten Sektion 34 wieder aufgenommen und gelangt zurück in die letzte Sektion 36, wo er zwar teilweise erneut von der Abluft 60 ausgespült wird, größtenteils aber im Gut verbleibt und dann zusammen mit diesem den Bandtrockner 10 über eine Abförderschnecke 70 der Gutabgabe 18 verlässt.

Die letzte Sektion 36 wird hingegen - so wie auch die Sektionen 30 und 32 - nicht mit Abluft aus einer anderen Sektion versorgt, sondern mit Frischluft 52. Dies führt dazu, dass nicht Staub in den Sektionen und insbesondere nicht in der letzten Sektion 36 im Kreis geführt wird. Die Sektionen 30 und 32 werden so betrieben, dass die dortige Abluft 60 einen sehr hohen Feuchtigkeitssättigungsgrad hat und in die Umgebung des Bandtrockners 10 abgegeben werden kann.

Die Wärmeübertrager 54 und 68 dienen zum sektionsweisen Aufheizen der Frischluft 52 sowie der Abluft 60 aus der letzten Sektion 36. Die Regelung der Heizleistung erfolgt dabei zusammen mit der Regelung der Förderleistung der Absaugeinrichtungen 62 und 66 so, dass einem (nicht dargestellten) dem Bandtrockner 10 zugeordneten Wärmelieferanten (z.B. einem Heizkraftwerk) eine bestimmte Wärmemenge abgenommen wird.

Zugleich werden von einer Feuchteregelung 72 die Feuchtegrade insbesondere der jeweiligen Abluft 60 gemessen und mittels der Bandlaufsteuerung 38 die Geschwindigkeit der Bandrollen 26 so geregelt, dass das getrocknete Gut 20 beim Verlassen der letzten Sektion 36 den gewünschten Trocknungsgrad aufweist. Der Wärmeübertrager 68 ist aufgrund der in der dortigen Zuluft 48 vorhandenen Staubbeladung mit einer Wärmeübertragerreinigung 74 versehen. Die Wärmeübertragerreinigung 74 ist so wie auch eine Bandnassreinigung 76 mit ihrem Sprühkopf 78 mittels Reinigungswasser 80 versorgt. Das genutzte Reinigungswasser 80 wird nach gebrauch als Abwasser 82 abgeführt. Die Bandnassreinigung 76 wird mittels einer Ventilsteuerung 84 mittels Druckluft 86 geregelt. Ferner ist an der Gutabgabe 18 eine Bandtrockenreinigung 88 vorgesehen, der an einem Blaskopf 90 mittels eines Ventilators 92 Zuluft 48 aus der letzten Sektion 36 zugeführt wird. Die derart genutzte Zuluft 48 wird mit dem darin enthaltenen Staub in die Abförderschnecke 70 geführt und gelangt ebenfalls nicht in die Umgebungsluft des Bandtrockners 10.

### Bezugszeichenliste

- 10: Bandtrockner
- 12: Gutaufgabe
- 14: feuchtes Gut
- 16: Guttrocknung
- 18: Gutabgabe
- 20: getrocknetes Gut
- 22: Bandvorrichtung
- 24: Band
- 26: Bandrolle
- 28: Verteilschnecke
- 30: Sektion
- 32: Sektion
- 34: Sektion
- 36: Sektion
- 38: Bandlaufsteuerung
- 40: Sprinkleranlage
- 42: Wasser
- 44: Wendewerk
- 46: Abschottblech
- 48: Zuluft
- 50: Frischluftzuführeinrichtung
- 52: Frischluft
- 54: Wärmeübertrager
- 56: Vorlauf
- 58: Rücklauf
- 60: Abluft
- 62: Absaugeinrichtung
- 64: Abluftrückführeinrichtung
- 66: Absaugeinrichtung der Abluftrückführeinrichtung
- 68: Wärmeübertrager der Abluftrückführeinrichtung
- 70: Abförderschnecke
- 72: Feuchteregelung
- 74: Wärmeübertragerreinigung
- 76: Bandnassreinigung
- 78: Sprühkopf
- 80: Reinigungswasser
- 82: Abwasser
- 84: Ventilsteuerung
- 86: Druckluft
- 88: Bandtrockenreinigung
- 90: Blaskopf
- 92: Ventilator

## Patentansprüche

1. Bandtrockner (10) zum Trocknen eines staubhaltigen Gutes mittels Warmluft in mindestens drei Sektionen (34, 36), die vom Gut aufeinander folgend durchlaufen werden und luftströmungsmäßig weitgehend getrennt sind,
bei dem eine Frischluftzuführeinrichtung (50) zum Zuführen von Frischluft (52) als Zuluft (48) zu der letzten vom Gut durchlaufenen Sektion (36) und eine Abluftrückführeinrichtung (64) zum Rückführen von Abluft (60) nebst des darin enthaltenen Staubes aus der letzten vom Gut durchlaufenen Sektion (36) als Zuluft zu der vorletzten vom Gut durchlaufenen Sektion (34) vorgesehen sind, wobei ferner der letzten und vorletzten Sektion (36; 34) mindestens eine weitere Sektion (30, 32) vorgelagert ist,
**dadurch gekennzeichnet, dass** je eine weitere Frischluftzuführeinrichtung (50) zum Zuführen von Frischluft (52) als Zuluft (48) zu der zugehörigen mindestens einen weiteren Sektion (30, 32) vorgesehen ist und die weitere Sektion (30, 32) nicht mit Abluft aus einer anderen Sektion versorgt ist.

2. Bandtrockner nach Anspruch 1,
bei dem die Abluftrückführeinrichtung (64) mit einem Wärmeüberträger (68) zum Erwärmen der rückgeführten Abluft (60) versehen ist.

3. Bandtrockner nach Anspruch 1 oder 2,
bei dem jede der Frischluftzuführeinrichtungen (50) mit einem Wärmeübertrager (54) zum Erwärmen der Frischluft (52) versehen ist.

4. Bandtrockner nach einem der Ansprüche 1 bis 3,
bei dem jede Sektion (30, 32, 34, 36) mit einer Absaugeinrichtung (62, 6) zum Abführen der Abluft (60) aus der Sektion (30, 32, 34, 36) vorgesehen ist.

5. Bandtrockner nach einem der Ansprüche 1 bis 4,
bei dem die Abluftrückführeinrichtung (64) mit einer Absaugeinrichtung (66) zum Abführen der Abluft (60) aus der letzten Sektion (36) vorgesehen ist, die zugleich zum Zuführen der Abluft (60) zu der vorletzten Sektion (34) angepasst ist.

6. Bandtrockner nach einem der Ansprüche 1 bis 5,
bei dem die vorletzte Sektion (34) und die mindestens eine vorgelagerte, weitere Sektion (30, 32) mit einer Absaugeinrichtung (62) zum Abführen der Abluft (60) in die Umgebung des Bandtrockners versehen sind.

7. Bandtrockner nach einem der Ansprüche 4 bis 6,
bei dem die Absaugeinrichtungen (62, 66) sektional getrennt geregelt sind.

8. Bandtrockner nach einem der Ansprüche 1 bis 7,
bei dem eine Bandreinigungseinrichtung (88) vorgesehen ist, mit der Zuluft (48) aus der letzten Sektion (36) abgeführt und zum Reinigen des Bandes (24) des Bandtrockners (10) verwendet werden kann.

## Claims

1. Belt dryer (10) for drying a dust-laden material by means of hot air in at least three sections (34, 36) which are successively traversed by the material and are largely separated in terms of air flow,
in which there are provided a fresh air supplying device (50) for supplying fresh air (52) as supply air (48) to the last section (36) traversed by the material and an exhaust air recirculation device (64) for recirculation of exhaust air (60) along with the dust contained therein from the last section (36) traversed by the material as supply air to the next-to-last section (34) traversed by the material, there being further arranged upstream of the last and next-to-last section (36; 34) at least one further section (30, 32),
**characterised in that** in each case a further fresh air supplying device (50) for supplying fresh air (52) as supply air (48) to the associated at least one further section (30, 32) is provided and the further section (30, 32) is not supplied with exhaust air from another section.

2. Belt dryer according to Claim 1,
in which the exhaust air recirculation device (64) is provided with a heat exchanger (68) for heating the recirculated exhaust air (60).

3. Belt dryer according to Claim 1 or 2,
in which each of the fresh air supplying devices (50) is provided with a heat exchanger (54) for heating the fresh air (52).

4. Belt dryer according to one of Claims 1 to 3,
in which each section (30, 32, 34, 36) is provided with a suction device (62, 66) for removing the exhaust air (60) from the section (30, 32, 34, 36).

5. Belt dryer according to one of Claims 1 to 4,
in which the exhaust air recirculation device (64) is provided with a suction device (66) for removing the exhaust air (60) from the last section (36), which at the same time is adapted for supplying the exhaust air (60) to the next-to-last section (34).

6. Belt dryer according to one of Claims 1 to 5,
in which the next-to-last section (34) and the at least one upstream, further section (30, 32) are provided with a suction device (62) for removing the exhaust air (60) into the environment of the belt dryer.

7. Belt dryer according to one of Claims 4 to 6,
in which the suction devices (62, 66) are controlled sectionally separately.

8. Belt dryer according to one of Claims 1 to 7,
in which a belt cleaning device (88) is provided, with which supply air (48) can be removed from the last section (36) and used to clean the belt (24) of the belt dryer (10).

## Revendications

1. Séchoir à bande (10) pour sécher une marchandise poussiéreuse à l'aide d'air chaud dans au moins trois sections (34, 36) parcourues à la suite les unes des autres par la marchandise et largement séparées par rapport au flux d'air ;
dans lequel on prévoit un dispositif d'amenée d'air neuf (50) pour introduire de l'air neuf (52) sous la forme d'air entrant (48) à la dernière section (36) parcourue par la marchandise ainsi qu'un dispositif d'évacuation d'air (64) pour évacuer l'air sortant (60) ainsi que la poussière contenue dedans hors de la dernière section (36) parcourue par la marchandise sous la forme d'air entrant (9) amené à l'avant-dernière section (34) parcourue par la marchandise, au moins une section (30, 32) supplémentaire étant en outre disposée en amont de la dernière et l'avant-dernière section (36 ; 34) ; **caractérisé en ce que** respectivement un dispositif d'amenée d'air neuf (50) supplémentaire est prévu pour amener de l'air neuf (52) sous la forme d'air entrant (48) à la au moins une section (30, 32) supplémentaire associée et que la section (30, 32) supplémentaire n'est pas alimentée en air sortant provenant d'une autre section.

2. Séchoir à bande selon la revendication 1, dans lequel le dispositif d'évacuation d'air (64) est pourvu d'un échangeur de chaleur (68) pour réchauffer l'air sortant (60) réintroduit.

3. Séchoir à bande selon la revendication 1 ou 2, dans lequel chacun des dispositifs d'amenée d'air neuf (50) est pourvu d'un échangeur de chaleur (54) pour réchauffer l'air neuf (52).

4. Séchoir à bande selon l'une quelconque des revendications 1 à 3, dans lequel chaque section (30, 32, 34, 36) est pourvue d'un dispositif d'aspiration (62, 6) pour aspirer l'air sortant (60) hors de la section (30, 32, 34, 36).

5. Séchoir à bande selon l'une quelconque des revendications 1 à 4, dans lequel le dispositif d'évacuation d'air (64) est pourvu d'un dispositif d'aspiration (66) pour évacuer l'air sortant (60) hors de la dernière section (36), ledit dispositif étant en même temps adapté pour amener l'air sortant (60) à l'avant-dernière section (34).

6. Séchoir à bande selon l'une quelconque des revendications 1 à 5, dans lequel l'avant-dernière section (34) et l'au moins une section (30, 32) supplémentaire placée en amont sont pourvues d'un dispositif d'aspiration (62) pour évacuer l'air sortant (60) dans l'environnement du séchoir à bande.

7. Séchoir à bande selon l'une quelconque des revendications 4 à 6, dans lequel les dispositifs d'aspiration (62, 66) sont réglés de façon à être séparés section par section.

8. Séchoir à bande selon l'une quelconque des revendications 1 à 7, dans lequel un dispositif de nettoyage de bande (88) est prévu à l'aide duquel l'air entrant (48) peut être évacué hors de la dernière section (36) et peut être utilisé pour nettoyer la bande (24) du séchoir à bande (10).
